# EUROPÄISCHE PATENTSCHRIFT

(11) **EP 2 304 127 B1**
(45) Veröffentlichungstag und Bekanntmachung des Hinweises auf die Patenterteilung: **22.01.2014**
(21) Anmeldenummer: 08874684.7
(22) Anmeldetag: 10.10.2008
(51) Int. Cl.: E04G 9/04, E04G 9/05, B32B 33/00, C09D 7/12

(54) **SCHALUNGSELEMENT**
SHEATHING ELEMENT
ÉLÉMENT DE COFFRAGE

(30) Priorität: 20.06.2008 DE 102008029010
(43) Veröffentlichungstag der Anmeldung: 06.04.2011
(73) Patentinhaber: Ostermann, Dieter, 41468 Neuss (DE)
(72) Erfinder: Ostermann, Dieter, 41468 Neuss (DE)
(74) Vertreter: Cohausz & Florack
(86) Internationale Anmeldenummer: PCT/EP2008/063675
(87) Internationale Veröffentlichungsnummer: WO 2009/152872

(56) Entgegenhaltungen:
- WO-A-2007/144718
- AT-B- 255 736
- BE-A6- 1 015 862
- DE-A1- 19 845 496
- DE-A1- 19 932 335
- DE-A1-102005 050 191
- DE-U1- 9 300 109

## Beschreibung

Die Erfindung betrifft die Verwendung einer Deckschicht für Schalungsflächen von Schalungselementen für Beton, insbesondere Schalungsplatten, mit wenigstens einer Schalungsfläche, wobei die wenigstens eine Schalungsfläche mit der Deckschicht versehen ist.

Schalungselemente verschiedenster Geometrien, insbesondere plattenförmige Schalungselemente, sind aus dem Beton- und Stahlbetonbau in den unterschiedlichsten Ausführungen seit Jahrzehnten bekannt. Zunehmend besteht auch bei geschalten Betonteilen der Bedarf, ihre Oberfläche ästhetisch ansprechend zu gestalten, um sie selbst auch als Gestaltungselement beispielsweise in einer Gebäudefassade einsetzen zu können. Ein entscheidendes Kriterium für eine ästhetische Oberfläche ist deren Glattheit. Dies wiederum erfordert, dass die eingesetzten Schalungselemente höchsten Ansprüchen hinsichtlich minimaler Rauheit und Porenfreiheit genügen müssen. Gleichzeitig muss das Entfernen der Schalungselemente nach erfolgter Härtung des Frischbetons in der Weise erfolgen können, dass die Gefahr eines Abplatzens von Teilen der Betonfassade infolge eines lokalen Anhaftens an dem Schalungselement oder einer Verklammerung mit dem Schalungselement ausgeschlossen ist. Ferner darf auch das vielfach einzusetzende Schalungselement beim Abnehmen nicht beschädigt werden.

Aus der Praxis ist es daher bekannt, die Schalungsflächen der Schalungselemente vor dem Einsatz mit einem Trennmittel zu versehen, so dass ein problemloses Ablösen der Schalungselemente sichergestellt ist. Das Auftragen des Trennmittels erfordert jedoch einen aus Kostengründen in der Regel nicht akzeptablen zusätzlichen Zeitaufwand. Ferner treten durch ungenaues Arbeiten immer wieder Fehler auf, die eine zeitintensive Nacharbeit erfordern. Zudem ist bei verschiedenen Anwendungen, beispielsweise bei der Herstellung von Trinkwasserspeichern aus Beton, die Verwendung von Schalungsöl als Trennmittel aus hygienischen Gründen ausgeschlossen.

Ferner sind aus der Praxis Schalungsplatten bekannt, welche an ihren Schalungsflächen mit einer Melaminharzschicht als permanenter Trennschicht beschichtet sind. Hierbei tritt das Problem auf, dass die Melaminharzschicht zur Rissbildung neigt, so dass die Schicht nach wenigen Einsätzen des so beschichteten Schalungselementes durch den Frischbeton teilweise unterwandert wird, so dass sie in relativ kurzer Zeit zerstört wird. Eine solche Schalungsplatte mit einer Beschichtung aus Reaktionsharz ist beispielsweise aus der DE 10 2005 050 191 A1 bekannt.

Aus der Patentliteratur sind eine große Zahl von Schalungselementen mit verschiedenen Beschichtungen bekannt. In der DE 93 00 109 U1 ist eine mehrschichtige Schalungsplatte beschrieben, welche als äußerste Schalungsfläche eine Schicht aus einer Mischung aus Polyolefinharzen und Holz- bzw. Zellulosestoffen, insbesondere Holzmehl, aufweist. Diese wird als abriebfest beschrieben und zeichnet sich durch ein geringes Absorptionsvermögen von Wasser und Ölen aus, so dass ein leichtes Ablösen vom erhärteten Beton gewährleistet ist. In der Praxis hat sich jedoch gezeigt, dass das Ablöseverhalten heutigen Ansprüchen nicht mehr genügt.

In der AT 255 736 ist eine Schalungsplatte beschrieben, bei der die Schalungsfläche mit einer zweischichtigen Kunstharzschicht belegt ist. Im Einzelnen werden die Poren der Schalungsfläche durch eine erste Kunstharzschicht gefüllt. Auf die Oberfläche dieser ersten Schicht wird eine Papierschicht aufgelegt, die ihrerseits dann durch eine weitere Kunstharzschicht bedeckt wird, so dass eine insgesamt glatte, wasserabweisende Oberfläche erhalten wird. Derartige Beschichtungen der Schalungsflächen haben sich in der Praxis jedoch nicht als hinreichend widerstandsfähig erwiesen.

Eine weitere kunststoffbeschichtete Schalungsplatte ist in der DE 199 32 335 A1 beschrieben. Sie wird als besonders alterungs- und witterungsbeständig sowie als widerstandsfähig gegen Chemikalieneinwirkung und mechanische Belastungen beschrieben. Jedoch bietet sie keine Lösung, um dem Problem einer erschwerten Ablösbarkeit des Schalungselementes vom erhärteten Beton zu begegnen.

In der DE 102 56 361 B4 ist schließlich eine Schalungsplatte zum Herstellen von Beton- und Stahlbetontragwerken offenbart, bei der ein plattenförmiger Holzkern beidseits mit Schichten aus mit Holzmehl gefülltem Polypropylen (HMPP) belegt ist, wobei die HMPP-Schichten ihrerseits mit Polypropylen überzogen sind. Der gesamte Schichtaufbau ist in eine Rahmenkonstruktion eingesetzt, die der Schalungsplatte eine erhöhte Steifigkeit verleiht. Auch hier ist das Problem einer nicht optimalen Ablösbarkeit vom erhärteten Beton gegeben.

Weiterhin ist es im Möbelbau, beispielsweise aus der DE 198 45 496 A1, bekannt, Oberflächenbeschichtungen mit Nanopartikeln zu verwenden.

Ausgehend von dem vorstehend diskutierten Stand der Technik liegt der Erfindung die Aufgabe zugrunde, ein Schalungselement für Beton anzugeben, das sich durch eine verbesserte Ablösbarkeit und Oberflächenqualität bedingt durch eine hohe Abrasionsbeständigkeit auch nach einer großen Zahl von Einsätzen auszeichnet.

Die Aufgabe wird erfindungsgemäß durch die Verwendung einer Nanopartikel enthaltenden Lackschicht als Deckschicht gemäß dem Anspruch 1 gelöst.

Die erfindungsgemäß vorgesehene Nanopartikel enthaltende Lackschicht fungiert als eine permanente Trennschicht für die Schalungsfläche des Schalungselementes. Durch die Kombination eines auf die Schalungsfläche aufzutragenden Lacksystems mit darin enthaltenen Nanopartikeln ist einerseits eine extrem Glattheit der Schalungsfläche möglich, da in der Schalungsfläche vorhandene Poren durch die Lackschicht geschlossen werden. Entsprechend kann die daran abgeformte Betonoberfläche potenziell höchsten ästhetischen Ansprüchen genügen, da es nicht zu Verklammerungseffekten zwischen dem gehärteten Beton und der Schalungsfläche kommt, die eine einfache, zerstörungsfreie Ablösung des Schalungselementes erschweren bzw. verhindern. In Untersuchungen des Anmelders konnten mittlere Rauheiten von R_{a'} ≈ 2 nm erreicht werden. Ferner bewirken die in dem Lackbindemittel als elastischer Matrix fein verteilten Nanopartikel andererseits eine extrem hohe permanente Abrasionsbeständigkeit (Abriebfestigkeit und Kratzunempfindlichkeit), so dass die erfindungsgemäß beschichtete Schalungsfläche auch nach vielfacher Anwendung auch unter ungünstigten Bedingungen hinsichtlich einer mechanischen Beanspruchung noch problemlos einsetzbar ist.

Es versteht sich, dass das erfindungsgemäß beschichtete Schalungselement neben Beton auch für andere abformbare Materialien geeignet ist, insbesondere für solche mit hydraulischen Bindemitteln wie Gips, Kalk, Ton und weitere.

Als Lacke können kommerziell verfügbare Lacksysteme eingesetzt werden. Als besonders geeignet erweisen sich Acrylharzlacke, insbesondere strahlungshärtbare Lacke, wie z.B. UV-härtbare Acrylharzlacke. Prinzipiell ebenfalls verwendbar sind weitere synthetische Lacksysteme, wie z.B. Alkydharze, die sich durch eine besondere Hydrophobie auszeichnen. Auch ist der Einsatz von natürlichen Harzen denkbar. Durch entsprechende Auswahl des Lacksystems wird eine sehr hohe Beständigkeit der Schalungsfläche gegen Chemikalien, wie verschiedene Lösungsmittel, Laugen, Säuren verschiedene Lebensmittel und Öle, in einem weiten pH-Bereich sowie eine UV-Langzeitstabilität erreicht.

Erfindungsgemäß enthält das Lacksystem Nanopartikel. Diese können einen mittleren Durchmesser von ca. 10 bis ca. 200 nm, bevorzugt 10 nm aufweisen. Die Nanopartikel können durch eine Vielzahl von Stoffen (Metalle, Halbmetalle oder Metalloxide) gebildet werden. Besonders eignen sich solche Materialien, die auch mikroskopisch eine entsprechende Härte aufweisen, um der auf die Schalungsfläche aufgebrachten, die Nanopartikel enthaltenden Lackschicht die gewünschte makroskopische Abrasionsbeständigkeit zu verleihen. Besonders eignen sich Nanopartikel aus Halbmetalloxiden, insbesondere Siliziumdioxid. Um die gewünschten Eigenschaften zu erreichen, beträgt der Anteil der Nanopartikel in der aufgebrachten und ausgehärteten Lackschicht bevorzugt ca. 60 bis 75 Gewichts-%, besonders bevorzugt ca. 75 Gewichts-%.

Der auf die Schalungsfläche aufzutragende Lack kann über einen Sol-Gel-Prozess erzeugt werden, wie aus dem Stand der Technik an sich bekannt. Er ist durch verschiedenste Lösungsmittel verdünnbar, so dass die gewünschten Verarbeitungseigenschaften präzise eingestellt werden können. Wird beispielsweise Ethanol als Lösungsmittel eingesetzt, so weist der verarbeitbare Lack bei einem Ethanol-Anteil von ca. 70 Gewichts-% einen Feststoffanteil (Lackbindemittel mit Nanopartikeln) von entsprechend ca. 30 Gewichts-%, eine Dichte von ca. 0,876 g/cm³ und eine Viskosität 2,3 mPa·s auf.

Der Lösungsmittelanteil in der verarbeitbaren Lackschicht kann ca. 70 Gewichts-% bis ca. 90 Gewichts-% betragen.

Der in einen verarbeitbaren Zustand gebrachte Lack kann auf verschiedene Arten auf die Schalungsfläche des Schalungselementes appliziert werden. Geeignete Auftragverfahren sind beispielsweise Sprühen, Tauchen, Schleudern, Fluten, Rakeln, Walzen oder Drucken. Dabei wird erfindungsgemäß eine Trockenschichtdicke d < 10 µm, beispielsweise 7 - 8 µm, eingestellt, was mit den vorstehend genannten Techniken problemlos möglich ist. Untersuchungen des Anmelders haben gezeigt, dass es bei höheren Schichtdicken bei mechanischer Beanspruchung zu Abplatzungen kommt. Weiter haben Untersuchungen des Anmelders gezeigt, dass sich bei einer eingestellten Trockenschichtdicke von 5 µm ein Lackverbrauch von 15 g/m² ergibt.

Das Schalungselement seinerseits kann unterschiedlichste Geometrien aufweisen. Denkbar sind plattenförmige ebenso wie sphärische oder gewinkelte Geometrien. Ferner kann das Schalungselement aus verschiedenen Werkstoffen gefertigt sein. Geeignet sind beispielsweise polymere Werkstoffe. Besonders bevorzugt ist der Einsatz von polymeren Kunststoffen der Gruppe Polycarbonat (PC), Polymethylmethacrylat (PMMA), Polyethylenterephthalat (PET), Acrylnitril-Butadien-Styrol-Copolymerisat (ABS), Acrylester-Styrol-Acrylnitril (ASA), Polyvinylchlorid (PVC), Polyetheretherketon (PEEK), Polyethylen (PE) und Polypropylen (PP).

Bei diesen, wie auch bei anderen Werkstoffen, kann die Lackschicht unmittelbar auf die Oberfläche des Schalungselementes aufgebracht sein.

Besonders weit verbreitet im Bereich der Betonverschalung sind Holzwerkstoffe, da sie kostengünstig verfügbar und mechanisch robust sind. Diese können ebenfalls unmittelbar mit der die Nanopartikel enthaltenden Lackschicht beschichtet werden.

Eine aus einem Holzwerkstoff gefertigte Schalungsplatte weist nach einer weiteren Ausgestaltung der Erfindung zwischen der Schalungsfläche und der Lackschicht eine weitere Schicht auf. Hierbei kann es sich beispielsweise um eine Polyesterharzschicht handeln. Diese sorgt für eine grobe Glättung der in der Regel zunächst stark rauen und porigen Oberfläche des Holz-Schalungselementes. Auf die - bevorzugt angeschliffene - Schichtoberfläche wird sodann die Nanopartikel enthaltende Lackschicht aufgetragen. Diese weist dann die gewünschte minimale Rauheit und Abrasionsbeständigkeit auf. Die hohe Elastizität einer Nanopartikel enthaltenden Lackschicht auf beispielsweise Acrylat-Basis qualifiziert diese besonders für die Anwendung im Zusammenhang mit einem aus Holz gefertigten Schalungselement, da es sich bei Holz bekanntermaßen um einen "arbeitenden" Werkstoff handelt.

### Beispiel 1

Ein unbehandeltes Holzschalungsbrett wird im ersten Schritt mit ca. 30 µm Haftvermittler aus Polyesterharz, bestehend aus 98 Gewichts-% Reinharz und 2 Gewichts-% Härter, beschichtet. Diese Haftvermittlerschicht wird mit einem Schleifer (ca. 180er Korn Schleifpapier) angeschliffen, damit die erfindungsgemäß vorgesehene Deckschicht als funktionale Beschichtung haften kann.
Das UV-Nanobeschichtungsmaterial hat im verarbeitbaren Zustand einen Feststoffanteil von 30 Gewichts- % und 70 Gewichts-% Ethanol als Lösemittel. Als funktionale Pigmente werden 10 nm große SiO₂-Nanopartikel genutzt. Als Bindemittel wird ein Acrylat in der Zusammensetzung 20 Gewichts-% Pentaeythrittetraacrylat und 5 Gewichts-% Pentaerythrittriacrylat genutzt. Dieses Beschichtungsmaterial hat in dieser Zusammensetzung eine Dichte von 0,876 g/cm³ und eine Viskosität von 2,3 mPa·s.

Das Beschichtungsmaterial wird mit einer Nassschichtdicke von ca. 20µm auf das mit der Haftvermittlerschicht versehene Schalungsbrett aufgesprüht. Der durchschnittliche verbrauch beträgt dabei ca. 22 g/m². Sodann folgt eine Wartezeit von mindestens 15 Sekunden, in der das Lösemittel aus dem nassen Film entweicht.

Anschließend wird die Beschichtung durch eine UV-Belichtungseinheit mit einer Energiedosis von 2-5 J/cm² gehärtet. Durch die UV-Härtung sind sehr hohe Prozessgeschwindigkeiten erreichbar.
Nach Abschluss der Härtung wird eine optisch neutrale, hoch transparente Nanobeschichtung mit einer Trockenschichtdicke von ca. 7-8 µm erhalten, die transparent, hoch abriebsfest, kratzunempfindlich und hydrophob ist.

Die hohe Transparenz der ausgehärteten Schicht ist dabei eine Folge der homogenen Verteilung der Nanopartikel. Die Kratzunempfindlichkeit ergibt sich durch die hohe Härte der Nanopartikel, die in das Lackbindemittel als eine elastische Matrix eingebunden sind.

An der aufgebrachten und ausgehärteten Schicht wurden verschiedene Versuche zur Festellung der Gebrauchsfähigkeit vorgenommen:

Die Ritzhärte dieser Schicht beträgt nach Wolff-Wilborn auf Glas und PMMA demnach 7H und auf PC 3H. Gemessen mit einem Erichsen-Stab 318 beträgt die Ritzhärte auf PMMA 15N und auf Polycarbonat 5N.

Die Abriebsfestigkeit wurde mit einem Taber-Abraser bestimmt (500 Umdrehungen, die Schleifscheiben sind vom Typ CS10F, belastet mit 2 x 500 Gramm). Der Trübungsverlust dieser Beschichtung auf Glas oder Polycarbonat war kleiner als 10% und ein Gewichtsverlust war nicht messbar.
Die Hydrophobie dieser Beschichtung wurde mittels Kontaktwinkelmessungen bestimmt. Der Kontaktwinkel war größer als 90°, d.h. die Beschichtung zeigt eine ausgeprägt Hydrophobie.

Die Beschichtung zeigt desweiteren eine hervorragende chemische Beständigkeit. Sie ist beständig gegen polare, aliphatische und aromatische Lösemittel. Diese Beständigkeit ist wichtig, da auf den Baustellen mit unterschiedlichen Lösemitteln gearbeitet wird. Desweiteren ist sie beständig gegen verdünnte Säuren (z.B. HCl 0,1 molar) und verdünnte Laugen (z.B. KOH 0,1 molar). Desweiteren ist sie in dem pH-Wert-Bereich 2-14 stabil. Diese pH-Stabilität ist sehr wichtig, da sich die Aushärtung von Beton im pH-Wert-Bereich 5-14 abspielt. Schließlich haben Messungen des Anmelders an der vorstehend beschriebenen Beschichtung ergeben, dass diese Beschichtung außenwitterungsbeständig ist.

Die Oberfläche der Nanobeschichtung weist eine mittlere Rauheit von R_{a'} ≈ 2 nm auf und ermöglicht somit das Abformen von nahezu perfekt glatten und somit ästhetisch ansprechenden Betonoberflächen ohne Trennmittel.

Im folgenden wird die Erfindung anhand einer ein Ausführungsbeispiel darstellenden Zeichnung näher erläutert. es zeigen:
- Fig. 1: eine vergrößerte Schnittdarstellung der Grenzfläche zwischen einem erfindungsgemäßen Schalungselement aus Holz und einem ausgehärteten Betonteil,
- Fig. 2: eine vergrößerte Schnittdarstellung der Grenzfläche zwischen einem erfindungsgemäßen Schalungselement aus Holz und einem ausgehärteten Betonteil in einer alternativen Ausführung und
- Fig. 3: eine vergrößerte Schnittdarstellung der Grenzfläche zwischen einem Schalungselement aus Holz nach dem Stand der Technik und einem ausgehärteten Betonteil.

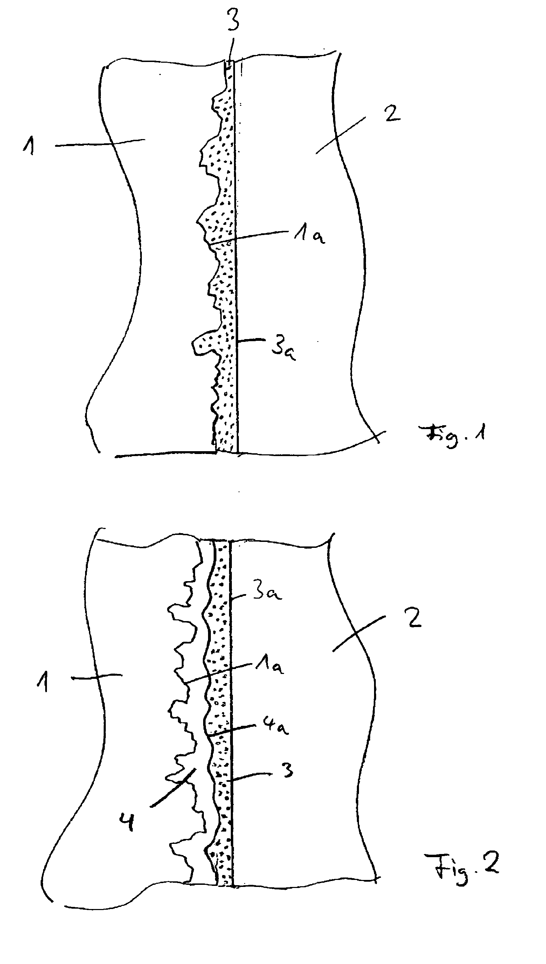

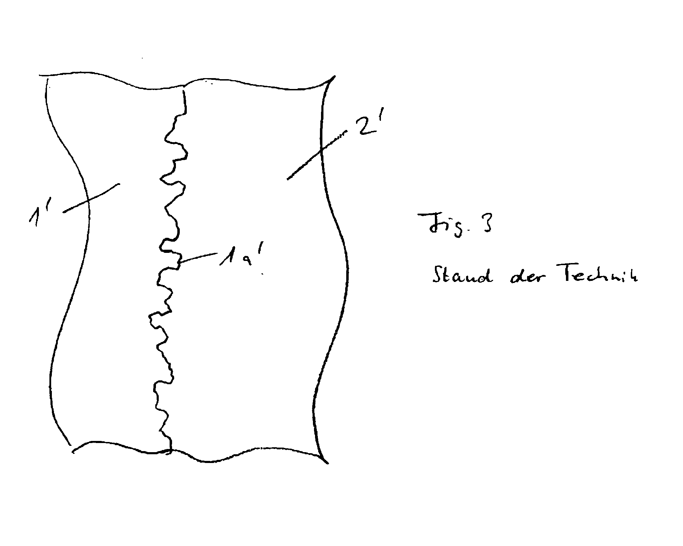

In Fig. 1 ist in vergrößerter Darstellung die Grenzfläche zwischen einem erfindungsgemäß beschichteten Schalungselement 1, vorliegend in Plattenform, und einem daran abgeformten und ausgehärteten Betonteil 2 gezeigt. Wie dargestellt, sind die Poren der Schalungsfläche 1a des Schalungselementes 1 vollständig mit einer Nanopartikel (symbolisch als Punkte dargestellt) enthaltenden Lackschicht 3 als permanenter Trennschicht gefüllt. Bei der Lackschicht 3 handelt es sich beispielsweise um einen UV-gehärteten Acrylatlack mit SiO₂-Nanopartikeln. Die Oberfläche 3a der Lackschicht 3 weist eine mittlere Rauheit von typischerweise R_{a'} ≈ 2 nm auf und ermöglicht somit das Abformen von nahezu perfekt glatten und somit ästhetisch ansprechenden Betonoberflächen. Aufgrund der ausgepägten Glattheit kommt es nicht zu Verklammerungseffekten zwischen der Schalungsfläche und dem Beton, wie im Falle von einfachen unbehandelten Schalungsflächen (Fig. 3). Somit ist ein einfaches Ablösen des Schalungselementes nach erfolgter Aushärtung des Betons möglich. Ferner sorgen die Nanopartikel für eine exzellente permanente Abrasionsbeständigkeit, so dass eine hohe Wiederverwendbarkeit und Lebensdauer des Schalungselementes gegeben ist. Aufgrund ihrer hohen Elastizität macht die Lackschicht 3 Schrumpfungs- und Dehnungsbewegungen des Holz-Schalungselementes 1 problemlos mit.

In Fig. 2 ist eine modifizierte Ausführungsform der Grenzfläche zwischen Schalungsplatte 1 und Beton 2 wiederum in vergrößerter Schnittdarstellung gezeigt. Die Schalungsfläche 1a des Holz-Schalungselementes 1 ist hier mit einem Polyesterharz beschichtet, welcher die Poren in der Oberfläche 3a bereits teilweise schließt. Auf die Oberfläche 4a der Polyesterharzschicht 4 ist nun die Lackschicht 3 aufgetragen. Hierzu ist die Oberfläche 4a der Polyesterharzschicht bevorzugt durch Anschleifen aufgeraut, um eine feste Verklammerung der Polyesterharzschicht 4 mit der Lackschicht 3 zu erreichen.

In Fig. 3 ist die Situation bei einem einfachen Schalungselement 1' des Standes der Technik gezeigt. Wiederum ist das Schalungselement 1' aus Holz gefertigt, jedoch gilt dies prinzipiell, wenn auch in abgeschwächter Form für andere Schalungswerkstoffe. Wie in Fig. 3 dargestellt, kommt es zu einer intensiven Verklammerung zwischen dem in die Poren des Schalungselementes 1' eingedrungenen Beton 2' und dem Schalungselement 1'. Hierdurch wird ein zerstörungsfreies Ablösen des Schalungselementes nach dem Erhärten des Betons verhindert.

## Patentansprüche

1. Verwendung einer Nanopartikel enthaltenden Lackschicht (3) mit einer Trockendicke d < 10 µm als Deckschicht für ein Schalungselement (1) für Beton, insbesondere für eine Schalungsplatte, mit wenigstens einer Schalungsfläche (1a), wobei die wenigstens eine Schalungsfläche (1a) mit der Deckschicht (3) versehen ist.

2. Verwendung nach Anspruch 1,
wobei der die Nanopartikel enthaltende Lack ein Acrylharz ist.

3. Verwendung nach Anspruch 1 oder 2,
wobei der Lack ein strahlungshärtbarer Lack, insbesondere eine UV-härtbarer Lack ist.

4. Verwendung nach einem der Ansprüche 1 bis 3,
wobei die Nanopartikel zumindest teilweise durch Halbmetalloxid-Partikel, insbesondere SiO₂-Partikel, gebildet sind.

5. Verwendung nach einem der Ansprüche 1 bis 4,
wobei die Nanopartikel einen mittleren Durchmesser von ca. 10 bis ca. 200 nm, bevorzugt ca. 10 nm, aufweisen.

6. Verwendung nach einem der Ansprüche 1 bis 5,
wobei der Anteil der Nanopartikel in der ausgehärteten Lackschicht (3) ca. 60 bis 75 Gewichts-%, bevorzugt ca. 75 Gewichts-%, beträgt.

7. Verwendung nach einem der Ansprüche 1 bis 6,
wobei der Lack durch Sprühen, Tauchen, Schleudern, Fluten, Rakeln, Walzen oder Drucken auf die Schalungsfläche (1a) aufgetragen ist.

8. Verwendung nach einem der Ansprüche 1 bis 7,
wobei das Schalungselement (1) aus einem polymeren Werkstoff gefertigt ist.

9. Verwendung nach Anspruch 8,
wobei der polymere Werkstoff ein Werkstoff der Gruppe Polycarbonat (PC), Polymethylmethacrylat (PMMA), Polyethylenterephthalat (PET), Acrylnitril-Butadien-Styrol-Copolymerisat (ABS), Acrylester-Styrol-Acrylnitril (ASA), Polyvinylchlorid (PVC), Polyetheretherketon (PEEK), Polyethylen (PE) und Polypropylen (PP) ist.

10. Verwendung nach einem der Ansprüche 1 bis 9,
wobei die Lackschicht (3) unmittelbar auf die Schalungsfläche aufgebracht ist.

11. Verwendung nach einem der Ansprüche 1 bis 7,
wobei das Schalungselement (1) aus einem Holzwerkstoff gefertigt ist.

12. Verwendung nach Anspruch 11,
wobei das Schalungselement (1) zwischen der Schalungsfläche (1a) und der Nanopartikel enthaltenden Lackschicht (3) eine weitere Schicht (4) aufweist.

13. Verwendung nach Anspruch 12,
wobei die weitere Schicht (4) eine Polyesterharzschicht ist.

## Claims

1. Use of a paint layer (3) containing nanoparticles and having a dry thickness d < to µm as a cover layer for a formwork element (1) for concrete, in particular for a formwork panel, with at least one formwork surface (1a), wherein the at least one formwork surface (1a) is provided with the cover layer.

2. Use according to claim 1, wherein the paint containing nanoparticles is an acrylic resin.

3. Use according to claim 1 or 2, wherein the paint is a radiation curable paint, in particular a UV-curable paint.

4. Use according to any one of claims 1 to 3, wherein the nanoparticles are formed at least in part by metalloid oxide particles, in particular SiO₂ particles.

5. Use according to any one of claims 1 to 4, wherein the nanoparticles have a mean diameter of approximately 10 to approximately 200 µm, preferably approximately 10 nm.

6. Use according to any one of claims 1 to 5, wherein the proportion of nanoparticles in the cured paint layer (3) is approximately 60 to 75% by weight, preferably approximately 75% by weight.

7. Use according to any one of claims 1 to 6, wherein the paint is applied by spraying, dripping, casting, flooding, doctoring, rolling or printing on the formwork surface (1a).

8. Use according to any one of claims 1 to 7, wherein the formwork element (1) is made from a polymer material.

9. Use according to claim 8, wherein the polymer material is a material from the group consisting of polycarbonate (PC), polymethylmethacrylate (PMMA), polyethylene terephthalate (PET), acrylonitrile-butadiene-styrene-copolymer (ABS), acrylester-styrene-acrylonitrite (ASA), polyvinylchloride (PVC), polyetheretherketone (PEEK), polyethylene (PE) and polypropylene (PP).

10. Use according to any one of claims 1 to 9, wherein the paint layer (3) is applied directly to the formwork surface.

11. Use according to any one of claims 1 to 7, wherein the formwork element (1) is made from a wood material.

12. Use to claim 11, wherein the formwork element (1) has a further layer (4) between the formwork surface (1a) and the paint layer (3) containing nanoparticles.

13. Use according to claim 12, wherein the additional layer (4) is a polyester resin coating.

## Revendications

1. Utilisation d'une couche de vernis (3) contenant des nanoparticules et ayant une épaisseur sèche d < 10 µm, en tant que couche de revêtement pour un élément de coffrage (1) pour le béton, en particulier pour un panneau de coffrage, avec au moins une surface de coffrage (1a), l'au moins une surface de coffrage étant pourvue de la couche de revêtement.

2. Utilisation selon la revendication 1, dans laquelle le vernis contenant des nanoparticules est une résine acrylique.

3. Utilisation selon la revendication 1 ou 2, dans laquelle le vernis est un vernis durcissable par rayonnement, en particulier un vernis durcissable sous action UV.

4. Utilisation selon l'une quelconque des revendications 1 à 3, dans laquelle les nanoparticules sont formés au moins partiellement de particules d'oxyde de métalloïde, en particulier de particules de SiO₂.

5. Utilisation selon l'une quelconque des revendications 1 à 4, dans laquelle les nanoparticules présentent un diamètre moyen d'environ 10 à environ 200 nm, de préférence environ 10 nm.

6. Utilisation selon l'une quelconque des revendications 1 à 5, dans laquelle la proportion des nanoparticules dans la couche de vernis (3) durcie s'élève à environ 60 à 75% du poids, de préférence environ 75% du poids.

7. Utilisation selon l'une quelconque des revendications 1 à 6, dans laquelle le vernis est appliqué sur la surface de coffrage (1a) par pulvérisation, immersion, projection, arrosage, application à la raclette, au rouleau ou impression.

8. Utilisation selon l'une quelconque des revendications 1 à 7, dans laquelle l'élément de coffrage (1) est fabriqué à partir d'un matériau polymère.

9. Utilisation selon la revendication 8, dans laquelle le matériau polymère est un matériau du groupe polycarbonate (PC), polyméthacrylate de (PMMA), polyéthylène téréphtalate (PET), acrylonitrile butadiène styrène (ABS), acrylonitrile styrène acrylate (ASA), polychlorure de vinyle (PVC), polyétheréthercétone (PEEK), polyéthylène (PE) et polypropylène (PP).

10. Utilisation selon l'une quelconque des revendications 1 à 9, dans laquelle la couche de vernis (3) est appliquée directement sur la surface de coffrage.

11. Utilisation selon l'une quelconque des revendications 1 à 7, dans laquelle l'élément de coffrage (1) est fabriquée à partir d'un matériau de bois.

12. Utilisation selon la revendication 11, dans laquelle de coffrage (1) présente une couche supplémentaire (4) entre la surface de coffrage (1a) et la couche de vernis (3) contenant des nanoparticules.

13. Utitisation selon la revendication 12, dans laquelle la couche supplémentaire (4) est une couche de résine de polyester.
